# EUROPEAN PATENT APPLICATION

(11) **EP 1 162 801 A2**
(43) Date of publication of application: **12.12.2001**
(21) Application number: 01107538.9
(22) Date of filing: 27.03.2001
(51) Int. Cl.: H04L 12/64

(54) **Digital telecommunication network**

(30) Priority: 10.06.2000 US 591416
(71) Applicant: Nortel Networks Limited, Montreal, Quebec H2Y 3Y4 (CA)
(72) Inventor: Zeiss, Joachim, 1050 Wien (AT)
(74) Representative: Wiebusch, Manfred

(57) **Abstract**

A digital telecommunication network, comprising:
a number of user terminals (14, 16, 18, 20) each having a user interface which enables the user to call other user terminals by dialling telephone numbers assigned thereto and to call-up additional network functions, and
a switch system (12) establishing call connections between the user terminals and providing the additional network functions,
characterized in that the user terminals (14, 16, 18, 20) are formed by multi-purpose computers which emulate the functions and the user interface of a telephone set, and
the switch system is formed by a central unit (12) directly connected to the user terminals through a network (10) on which the user terminals communicate with each other and with the central unit in accordance with a transmission protocol based on addressed data packets.

## Description

### Background of the invention

The invention relates to a digital telecommunication network comprising a number of user terminals each having a user interface which enables the user to call other user terminals by dialling telephone numbers assigned thereto and to call-up additional network functions, and a switch system establishing call connections between the user terminals and providing the additional network functions.

Examples of telecommunication networks of this type are a public switched telephone network (PSTN) or a private branch exchange (PBX) which supports telephone traffic among a number of users within a company or an office as well as outside calls to or from these users. There also exist hybrid networks which combine private and public network components. If, for example, a company has offices in several cities, and there is a lot of telephone traffic between these offices, it may be advantageous to lease telecommunication trunks from the telephone company and to incorporate these trunks into the private network, so as to avoid the costs for a large number of long distance calls billed individually. An attractive variant of such a hybrid network is a so-called virtual private network (VPN) in which the trunks owned by the telephone company are not leased permanently but are provided by the telephone company only on demand. In this case, the long distance calls within the VPN may be switched in the same manner as in a public network. The difference between a VPN and a public network and the main advantage of a VPN resides in the fact that the telephone directory and the network configuration, including access conditions, security provisions and the like, are private and may be individualised according to the demands of the respective company.

In addition to the mere switching function, the switch system of a PBX, VPN and, in particular, a PSTN provides a large variety of additional network functions and features. These functions are typically incorporated in a so-called centralised exchange (CENTREX) and comprise for example features like call forwarding, wherein an ingoing call is automatically forwarded to another specified user terminal, call transfer, wherein an ingoing call is manually transferred to another user, conference calls permitting a conference between three or more participants, automatic display of the telephone number or name of a person calling, voice mail services, automatic call-back functions, automatic "call-waiting" alert functions, billing functions, security functions and many others known to a person skilled in the art.

The switch system of a conventional PSTN typically has a comparatively deep hierarchical structure. The lowest level is formed by the user terminals, mostly by conventional analog or digital telephone sets. The next level is the level of so-called access nodes each of which interconnects a number of user terminals and is further connected to a unit of a higher hierarchic level, a so-called peripheral. The peripherals each interconnect a number of access nodes and are, in a typical layout, connected to a top level unit which is called "the network". The network may be considered as a matrix-like arrangement of lines from the various peripherals and other switch systems, wherein each matrix element includes a switch for selectively connecting one specific line to another specific line. These switches of the network are controlled by a central unit in accordance with the telephone number that has been dialled by the user. Since only connections between not more than two users can be established in this way, special conference ports must be added in order to allow for telephone conferences of three or more users.

The components on the various levels of the switch system are conventionally formed by dedicated hardware. Intelligence for providing the additional network functions is distributed over the hierarchical system. Relatively simple but frequently used functions are implemented on the level of access nodes or on the level of the peripherals, whereas more complex and/or less frequently needed functions are centralised in the upper levels and especially in the central unit of the network.

A conventional private branch exchange (PBX) normally consist of only a single switch unit which directly connects the various users and provides only a limited selection of network functions.

It will be understood that the switch systems described so far are basically line switched systems, which means that a call connection between two user terminals is established by forming a physical line connection between them. By comparison, the Internet is an example of a packet switched system wherein the information to be transmitted is divided into a number of packets and each packet is individually routed through the network on the basis of address information included therein. Here, the transmission channels used for transmission from one user terminal to another are shared by a large number of users which send their data packets to various destinations.

As is well known, a public switched telephone network (PSTN) is frequently involved in data traffic on the Internet according to the Internet Protocol (IP). Namely, a PSTN normally provides the connection between the end user and an Internet service provider. On the other hand, the Internet Protocol or similar packet switched technologies are increasingly used in telephone networks, because they are useful, for example, for efficiently handling data traffic from switch to switch over the backbone of the telephone network. Moreover, so-called Next Generation Networks have been proposed in which the matrix like network is replaced by a switch system based on the Internet Protocol or ATM.

The lower hierarchical levels of telephone switch systems, however, are still adapted to line switching, mainly because most user terminals, i.e. normal telephone sets, are not adapted to packet switched data transmission.

If two user terminals are formed by multi-purpose computers e.g. by personal computers having an ISDN interface, a sound card and a microphone, it is possible however, to make telephone calls over the Internet (VoI = Voice over Internet). Such telephone connections over the Internet require that both users are online at the time of the telephone call which must be scheduled beforehand. Thus, this kind of telephone traffic does so far not take full advantage of the functions of a telephone switch system.

The Internet is particularly suited for the digital transmission of data such as text documents, images, software and the like which, in contrast to voice data, do not need to be processed in real time. However, the procedures for sending data of this kind to a specified address over the Internet are fundamentally different from the procedures for making or receiving a telephone call.

### SUMMARY OF THE INVENTION

It is an object of the invention to provide a telecommunication network which is suitable for the transmission of both voice and data, provides a high layout flexibility and is easy to operate from the viewpoint of the end user.

In order to achieve this object, there is provided a telecommunication network wherein the user terminals are formed by multi-purpose computers which emulate the functions and the user interface of a telephone set, and the switch system is formed by a central unit directly connected to the user terminals through a network on which the user terminals communicate with each other and with the central unit in accordance with a transmission protocol based on addressed data packets.

Since the user terminals are formed by multi-purpose computers which are adapted to communicate with other computers according to the Internet Protocol (IP/ATM) or a similar protocol based on addressed data packets, it is possible to replace the conventional hierarchical switch system by a system in which the user terminals and the central unit communicate with each other through the same network which must not necessarily have a hierarchical structure. As a result, all the expensive and inflexible dedicated hardware of conventional PSTNs can be dispensed with, and the same functionality can be achieved by a pure software solution. Thus, the complete library of additional network functions can be made available at reduced costs. This is why the network according to the invention is particularly suited as a private network such as a PBX or a VPN in medium sized companies or organisations. The user terminals and the central unit may be connected to one another for example by a local area network (LAN), the Internet or an intranet, and the software for the central unit may run on a private personal computer or workstation but may also be offered by a commercial service provider, e.g. an intranet provider. This software may conveniently be obtained by slightly modifying existing software that is presently used for managing VPNs.

Since the user interfaces in the user terminals are identical with those of conventional telephone sets, with the only difference that they are not formed by a physical telephone set but by a virtual telephone set emulated on a personal computer or workstation and shown on the computer screen, anybody who is familiar with a conventional telephone set is able to operate the network according to the invention in the same manner. The key pads forming the user interface of a conventional telephone set may simply be replaced by soft keys or buttons displayed on the computer screen. Likewise, more advanced user interfaces capable of interpreting commands and outputting messages in natural language can readily be implemented on the computer.

Since the transmission protocol used in the network according to the invention is suitable not only for voice transmission but equally well for data transmission, the exchange of data between users of the network becomes as easy as making a telephone call. Further, since the transmission of data and telephone calls are effected in the same way, the user has to store or to memorise only a single telephone directory for telephone calls and for the transmission of data of any kind.

It is another advantage of the invention that additional network functions can very easily be added, just by appropriately upgrading the software of the central unit and/or the user terminals. Software updates may of course be downloaded from the network itself, so that each user can very easily and very reliably be provided with the latest upgrade.

### BRIEF DESCRIPTION OF THE DRAWING

The objects, features and advantages of the invention will become apparent from the following description of preferred embodiments thereof in connection with the accompanying drawings, in which:
- Fig. 1: is a block diagram of a telecommunication network according to the invention;
- Fig. 2: is an image displayed on a computer screen of a user terminal; and
- Fig. 3 to 6: are simplified diagrams corresponding to figure 1 and illustrating a procedure for establishing a connection for a three-way telephone conference.

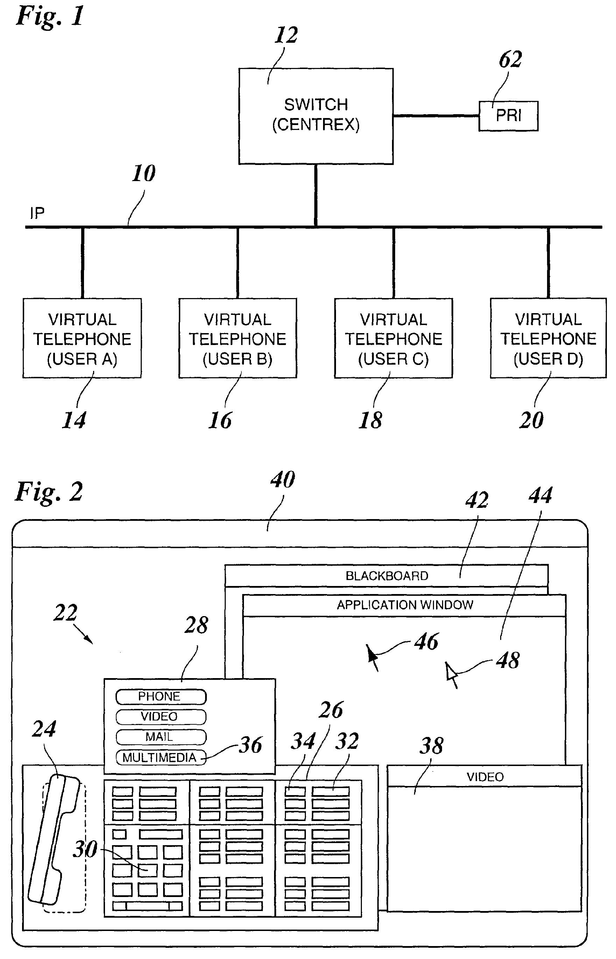

As is shown in figure 1, a branched transmission line 10 interconnects a central unit 12 and a number of user terminals 14, 16, 18 and 20. The central unit 12 as well as the user terminals 14-20 are formed by multi-purpose computers such as workstations or personal computers and are adapted to exchange data over the transmission line 10 in accordance with the Internet Protocol IP.

As is known per-se, each of the user terminals 14-20 comprises a soundcard to which a loudspeaker and a microphone or, alternatively, a headset including a transducer and an earphone are connected, so that each user terminal may function as input/output means for speech and sound. A software which is called "virtual telephone" is running in the background on each of the computers forming the user terminals 14-20. This software emulates the functions as well as the user interface of a conventional telephone set.

As is shown in figure 2, the user interface is essentially formed by an image displayed on a computer screen and depicting a telephone set 22 which, as usual, comprises a handset 24, a key pad 26 and a display 28. The key pad 26 comprises ten-digit keys 30 and a number of function keys 32 as well as control lamps 34 respectively associated with each function key. The ten-digit keys 30 are mainly used for dialling telephone numbers. The functions keys 32 are used for calling-up all kind of functions that are typically implemented in a modern telephone set such as call repetition, call transfer, call forwarding, display of a private telephone directory, temporarily holding a telephone call and the like. More complex functions may optionally be called-up with the aid of a menu displayed on the display 28. The display 28 as well as the control lamps 34 further serve for indicating status information as in a conventional telephone set.

A conventional PBX typically comprises different kinds of telephone sets with different grades of complexity. Thus, for example, more complex sets with more functions are provided for executives, administrators and the like. Likewise, the telephone sets 22 implemented as software in the user terminals 14-20 may be of different complexity and may include a larger or smaller number of functions keys 32. For example, a larger or smaller number of functions key for direct dialling may be provided.

The ten-digit keys 30 and the function keys 32 displayed on the computer screen are operated by a mouse click. Numbers such as telephone numbers may optionally be input by clicking on the ten-digit keys 30 or by using the keyboard of the computer.

In figure 2, the icon symbolising the handset 24 is shown in the off-hook position. This indicates that the virtual telephone set is in a state in which an incoming call has been accepted or in which an outgoing call can be made by dialling the desired telephone number (in the off-hook dial mode). If the user wants to "hang-up", the clicks on the handset icon 24 which then changes to the on-hook state shown in broken lines in figure 2. Another mouse click on the on-hook icon corresponds to the handset being taken up again.

Thus, the user interface of the virtual telephone set may be operated in the same manner as a conventional physical telephone set.

In the example shown, the network is suitable not only for making telephone calls but also for making video conferences, for transmitting data and for multimedia applications. This is why the display 28 in the state illustrated in figure 2 shows four soft keys 36 which correspond to four operating modes among which the user may select. The telephone mode is the default mode, and accordingly the corresponding soft key "PHONE" has been highlighted in figure 2. When this mode is active, the user may make a normal telephone call just by dialling the desired telephone number. When the mode "VIDEO" is activated, a video conference may be held, provided of course that the user terminals of the person calling and the person called are both equipped with a video camera. Once the call connection has been established, the image taken up by the video camera of the conference partner will be displayed in a separate window 38.

When the user wants to send an E-mail to another user through the network, he clicks on the soft key "MAIL" and dials the telephone number of the user to which the E-mail is to be sent. It will be appreciated that it is not necessary for the user to memorise or look up a specific E-mail address. Instead, he may simply use the telephone number or extension which is used for external or in-house telephone calls. If one of the function keys 32 has been programmed as a direct dial key for the user to which the E-mail is to be sent, then the E-mail may even be sent simply by pressing the pertinent function key 32.

When the "MAIL" button is clicked, another window (not shown) will pop up, and the user is prompted to type or paste the text of the E-mail, to add attachments, if any, and to enter a "send" instruction, as is common practice in E-mail systems. Of course, the "send" instruction can only be entered if the telephone number for the destination has been input. When the E-mail has been sent, the user may close the mail window or may choose to send the same E-mail to other users by entering the pertinent telephone numbers.

If an E-mail from another user has been received, this is indicated on the computer screen of the receiving person in the usual way, e.g. by an acoustic signal and/or a blinking icon and the like. Preferably, such icon is displayed in the head bar 40 of the computer screen, so that it is visible even when the image of the telephone set 22 is not activated or is not in the foreground. In order to open the E-mail, the receiving person may press a function key 32 to which the function "open mail box" has been assigned.

Typically, a voice mail system will also be implemented in the network according to the invention. Then, voice mails are retrieved in the same manner as written E-mails. If a new E-mail or voice mail is received, the person who has sent this mail may be identified on the display 28 in the same manner as a person calling in the telephone mode.

In telephone consultations and also in video conferences, it is frequently desirable to have a kind of blackboard on which information can be displayed that is simultaneously visible to all participants in the consultation or conference. In the shown embodiment, this is achieved by clicking on the "MULTIMEDIA" button the display 28, when the system is either in the telephone mode or in the video mode. This has the effect that a blackboard window 42 is displayed on the computer screen of all other participants. The contents of the blackboard window 42 is determined by the person who has clicked the MULTIMEDIA button. As an example, it may be assumed that the user whose computer screen is shown in figure 2 has opened an application window 44 which shows a text document created with a text processing application, graphic art drawn with a graphic application, a photograph that has been scanned-in or the like, and the user wants to discuss the contents of this application window in the telephone consultation or video conference. To this end, he brings the application window 44 into the foreground and then activates the virtual telephone function, e.g. by clicking on the image on the telephone set 22. Then he sets-up the telephone or video connection and clicks the MULTIMEDIA button. As result, a screen shot of the application window 44 will be displayed in the blackboard windows 42 on the computer screens of all participants. The user who has opened the application window 44 may then bring this window into the foreground again and may indicate certain items on this window with this mouse cursor 46. The position of this mouse cursor 46 relative to the application window will also be made visible on the blackboard windows 42 on the other participants. Conversely, the other participants may use their mouse cursors 48 for identifying items on the blackboard window 42, and an image 48 of this cursor will again be shown in the corresponding position on the application window 44. Thus, the users may discuss the contents of the application window as if it were displayed on a blackboard in a conference room.

The image displayed in the blackboard window may be updated in certain intervals, so that, when the first user makes any changes to the contents of the application window 44, these changes are also visible to other participants. It should be noted in this context that the other participants do not need to have the application software installed on their own computer.

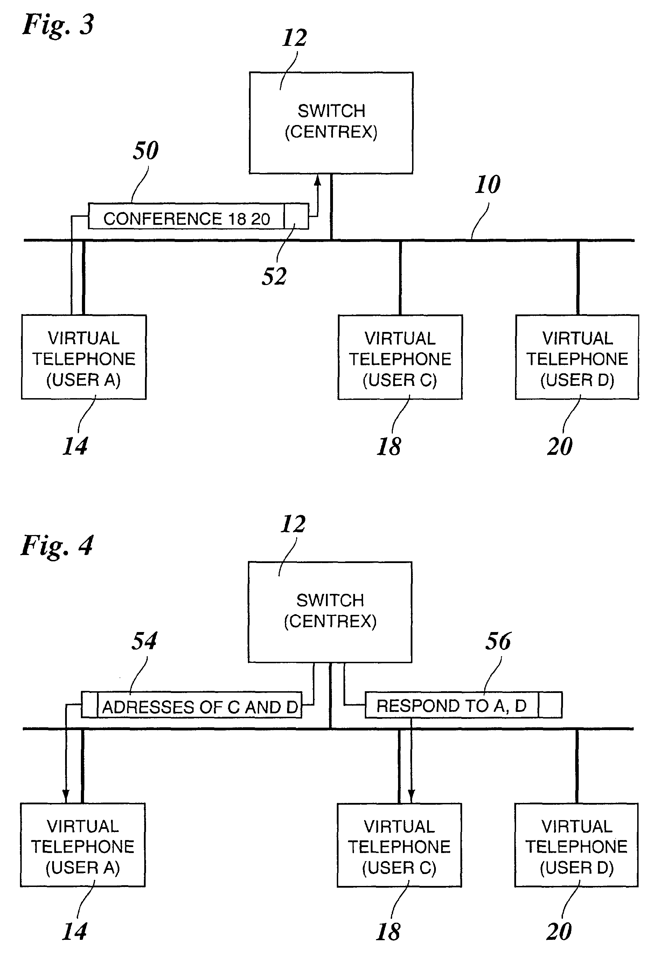

In order to exemplify the way how connections are built up and data traffic is organised on the network shown in figure 1, the essential steps for establishing a three-way conference, i.e. a video or telephone conference with three participants, will now be explained in conjunction with figures 3 through 6.

As in any PBX, a telephone number (extension number) is assigned to each of the user terminals 14-20. For simplicity, it is assumed here that the extension numbers are identical with the reference numbers of the respective user terminals. In addition, each user terminal as well as the central unit 12 has a network address (IP address) which is not identical with the extension number. A telephone directory assigning the pertinent extension number to each of the network addresses of the various user terminals is stored in the central unit 12.

When a new user logs-on to the network, the central unit 12, which is formed by a suitable software running on a multi-purpose computer such as a workstation or a personal computer, then invites the new user to enter his name or user ID and to select one of the not yet-assigned extension numbers. If a user moves to a different place, he simply connects to the transmission line 10 in the new place and logs-on under the new Internet address and with his former user ID. Since the extension number pertaining to this user ID is known already in the central unit 12, the extension number is automatically assigned to the new network address. Thus, the network can flexibly be adapted even in case the users are mobile.

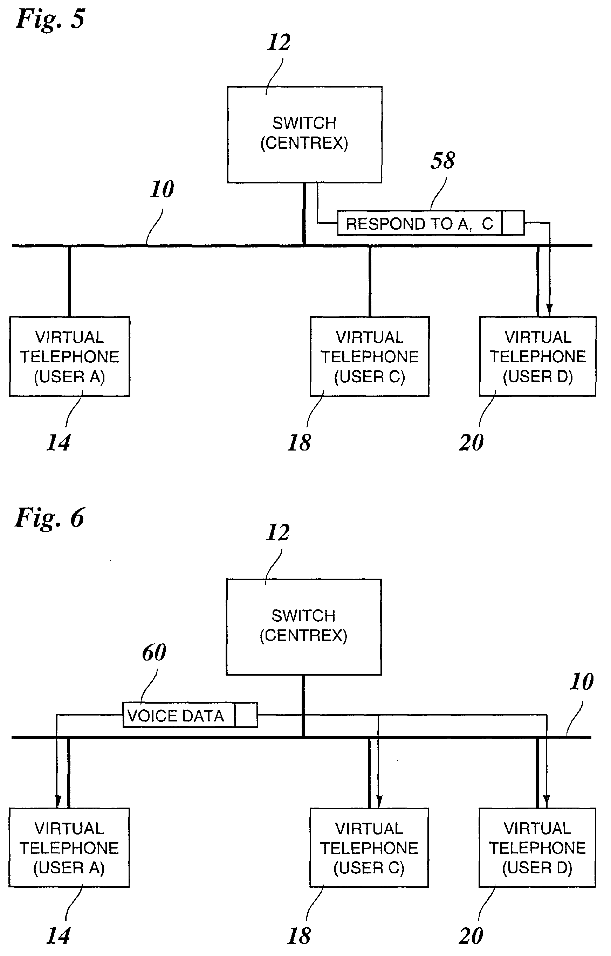

When, as is shown in figure 3, the user A wants to establish a telephone conference with the users C and D, he clicks on a suitable function button 32 on his virtual telephone set 22, i.e. the button having the function "conference", and then enters the extension numbers 18 and 20 of the users C and D. As a result, a data packet 50 is sent through the transmission line 10. A header 52 of this data packet includes the network address of the central unit 12. As a result, the central unit 12 is informed that telephone channels are to be opened for interconnecting the users A, C and D. The central unit 12 looks up the network addresses of the users C and D on the basis of the extension numbers 18, 20 received from the user A. Then, as is shown in figure 4, it returns a data packet 54 which indicates the network addresses of C and D to the user A. The header of the data packet 54 includes the known network address of the user A. Further, a data packet 56 is sent to the network address of the user C. This data packet 56 includes the network addresses of the users A and D as well as the instruction that voice packets sent from the user C shall from now on be transmitted to the address of the user A, and a copy of each packet shall be sent to the address of the user D. Similarly, as is shown in figure 5, the user D receives a data packet 58 including the network addresses of the users A and C and instructing him to send copies of voice data packet to these two network addresses.

The data packets 56 and 58 will also cause the virtual telephone sets 22 of the users C and D to "ring", and their respective displays 28 will show a message indicating that user A wants to hold a telephone conference with C and D.

The user terminals of all three users will then deliver voice data packets 60 provided with addresses as indicated by the central unit 12 to the transmission line 10, and these packets 60 will find their way to their respective destinations, as is shown in figure 6, without further intervention of the central unit 12.

It will be understood that, as in known "voice over Internet" applications, the voice data packets 60 have to be assembled with a suitable length and in a suitable frequency such that they can be put together on the receiving side and can be re-transformed into audible language in real time. In general, additional processing for echo removal and the like will be necessary, as is also known in the art.

If one of the participants in the telephone conference, the user D for example, receives a call from another user, e.g. from the user B, then the corresponding data packet sent from the central unit 12 will be answered by a packet indicating that the user terminal 20 is busy. This answer packet will not only be sent back to the central unit 12 but will also be sent directly to the user B. As a result, the user B will hear a "busy" signal on his earphone. If the user D has activated the "call waiting" alert, he will also hear an acoustic signal indicating that another caller wants to talk to him. User D may then choose to include the user B in the telephone conference (if the preset security provisions allow for this) or to put the conference partners A and C in the "hold" mode in order to talk to user B in-between, or he may simply reject the call of the user B. In the latter case, the call of user B may optionally be forwarded to yet another user, e.g. the secretary to user D. All these functions will be performed by transmitting suitable data packets over the transmission line 10, under the control of the central unit 12 which provides for all the additional network functions and features involved.

Since, in the example shown, the network is considered to be a PBX, there should also be a possibility to make or receive external calls. To this end, the switch unit 12 is connected to a so-called primary rate interface (PRI) 62 which connects to the switch system of a public network. Since, of course, it cannot be relied upon that the external user is also capable of directly handling packet data, it will in this case be the central unit 12 which assembles the voice packets into a continuos stream of digital voice data which are then sent to the PRI 62. Conversely, the voice data received through the PRI 62 will be transformed into packets by the central unit 12.

Thus, the network according to the invention provides all the telephone features and options of a conventional PBX. However, in addition to this, the network according to the invention provides multimedia applications and additional features which could not or at least not economically be implemented in a conventional PBX. Furthermore, the software of the central unit 12 and the virtual telephone software in the user terminals can easily be modified and upgraded in order to cope with increasing demands for even more sophisticated functionality.

If the virtual telephone software in the user terminals needs to the changed, the new software may simply be downloaded from the network. For example the new software for the central unit 12 and the user terminals 14-20 may be programmed by an operator who has his computer logged-on to the network. Then upon a command of the operator, the various software programs will be downloaded to the central unit and each user terminal, respectively.

The central unit 12 may also provide further service functions. For example, it may store the telephone directory for the entire network and/or user manuals for the various user terminals in a format which can be viewed or downloaded from each user terminal.

## Claims

1. A digital telecommunication network, comprising:
a number of user terminals (14, 16, 18, 20) each having a user interface which enables the user to call other user terminals by dialling telephone numbers assigned thereto and to call-up additional network functions, and
a switch system (12) establishing call connections between the user terminals and providing the additional network functions,
**characterized in that** the user terminals (14, 16, 18, 20) are formed by multi-purpose computers which emulate the functions and the user interface of a telephone set, and
the switch system is formed by a central unit (12) directly connected to the user terminals through a network (10) on which the user terminals communicate with each other and with the central unit in accordance with a transmission protocol based on addressed data packets (50, 54, 56, 58, 60).

2. Network as claimed in claim 1, wherein the transmission protocol is the Internet Protocol.

3. Network as claimed in claim 1 or 2, wherein the user interface comprises an image (22) of a telephone set displayed on the computer screen of the user terminal, with operating keys of the telephone set being configured as soft keys (30, 32).

4. Network as claimed in any of the preceding claims, wherein the user terminals each have a plurality of selectable operating modes including a telephone mode and at least one data transmission mode.

5. Network as claimed in claim 4, wherein one of the data transmission modes supports the transmission of a screen shot of an application window (44) on the computer screen of the user terminal, along with voice data.

6. Network as claimed in any of the preceding claims, wherein said additional network functions include at least one of a call forwarding function, a call transfer function and a conference function.

7. Network as claimed in any of the preceding claims, wherein a telephone directory is stored in the central unit (12) in a format suitable for being downloaded to each of the user terminals through the network (10).

8. Network as claimed in any of the preceding claims, wherein operating manuals for the user terminals are stored in the central unit (12) in a format suitable for being downloaded to the user interfaces through the network (10).

9. Network as claimed in any of the preceding claims, wherein the network (10) is configured as a private branch exchange.

10. Network as claimed in any of the claims 1 to 8, wherein the network (10) is configured as a virtual private network.

11. A method of upgrading a telecommunication network as claimed in any of the preceding claims by changing the available set of network functions, wherein software programs adapted to the changed network functions are downloaded from a host computer to the user terminals through the network (10).
